# EUROPEAN PATENT SPECIFICATION

(11) **EP 3 200 964 B1**
(45) Date of publication and mention of the grant of the patent: **27.09.2023**
(21) Application number: 14903319.3
(22) Date of filing: 30.09.2014
(51) Int. Cl.: B29C 48/255, B29C 48/345, B29C 48/92, B29C 48/21

(54) **NOZZLE FOR AN EXTRUDER WITH FLOW CONTROL**
DÜSE FÜR EINEN EXTRUDER MIT DURCHFLUSSREGELUNG
BUSE POUR UNE EXTRUDEUSE AVEC CONTRÔLE DE FLUX

(43) Date of publication of application: 09.08.2017
(73) Proprietor: Compagnie Générale des Etablissements Michelin, 63000 Clermont-Ferrand (FR)
(72) Inventor: FORTNER, James, Greenville, South Carolina 29605 (US); HOMMERSON, John, Greenville, South Carolina 29605 (US); PETROVICH, Michael, Greenville, South Carolina 29605 (US)
(74) Representative: Casalonga
(86) International application number: PCT/US2014/058235
(87) International publication number: WO 2016/053286

(56) References cited:
- WO-A1-91/03365
- WO-A1-02/087355
- WO-A2-2011/067354
- CN-U- 201 736 429
- US-A- 3 559 239
- US-A- 3 734 662
- US-A- 5 674 440
- US-A1- 2003 008 032
- US-A1- 2004 238 995
- US-B1- 6 251 452

## Description

### FIELD OF THE INVENTION

The present invention relates to a nozzle for an extruder that can be used to control the flow of material exiting the extruder and passing through a die.

### BACKGROUND OF THE INVENTION

In tire manufacturing, an extrusion machine or extruder is commonly used to extrude rubber materials into various tire components such as e.g., a tread rubber strip having a desired profile that can be applied to a tire carcass. The extruder typically includes a screw element received within a cylindrical sleeve. The screw element includes one or more flights or threads arranged along the length of the element. The screw element is rotated within the sleeve while material such as e.g., one or more rubbers or plastics are fed into one end of the sleeve. Rotation of the screw element masticates and heats the material while pushing the material through the sleeve and into an extrusion cavity. A die plate positioned at the exit of the extruder can be used to impart a particular shape to the material (such as e.g., the profile of a tread rubber strip) as it passes from the extrusion cavity and through one or more openings in the die plate under the substantial pressure created by rotation of the screw element.

Challenges are encountered when attempting to create the profile desired with the extrusion die. Particularly, one such problem relates to controlling the flow of material that is fed to the extruder die. The extrusion cavity, located upstream of the die, has a fixed capacity and a fixed width. Material exiting the extruder must first flow through this cavity and then through the die, where the final shape or profile of the material is created. With rubber and other materials, flow through the extrusion cavity is a constant volume flow. The flow of material must be distributed across the width of the die to obtain the desired profile of <...> = Examples for nozzles are shown in WO 2011/067354, WO 02/087355, US 2003/008032, WO 91/03365 or CN 201736429. material exiting the die. Frequently, to ensure this desired profile, adjustments to the flow of material through the extrusion cavity are required.

Conventional extrusion equipment has certain limitations in its ability to control flow in the extrusion cavity. For example, some equipment uses devices placed into the extrusion cavity to control flow but require disassembly of the cavity in order to adjust the flow pattern. Others may use sliding plates to narrow the width and/or height of the extruder outlet but these are undesirable because such devices only allow the final width or height of material exiting the extruder cavity to be adjusted and are thereby limited in their ability to control flow. In some cases, the profile of the material may be altered after it has exited the die using specially made tools, which adds undesirable expense and time to the manufacturing process. < ... >

Accordingly, a device for controlling the flow of material such as e.g., rubber to an extrusion die would be beneficial. More particularly, a device that can be placed upstream of the extrusion die and that provides for substantial adjustments in the flow of material across the width of the die would be very useful. Such a device that can be utilized without disassembly of the extruder cavity each time an adjustment is needed would be particularly beneficial. according to claim 1

### SUMMARY OF THE INVENTION

The present invention relates to a nozzle according to clim 1 for controlling the flow of extruded material, such as e.g., rubber material, from an extrusion machine. Movable pins are positioned into the path of material flow through an internal cavity of the nozzle. The pins are arranged across the path of flow upstream of the extrusion die. By moving the pins in and out, the flow of material through the cavity can be controlled at different locations across the width of the path of flow through the nozzle and to the die. Such adjustability allows for more precise control of the pattern of flow through the cavity such that the profile of material exiting the die can be more accurately maintained in the shape desired for the final product. The positioning of the pins can be readily adjusted without disassembly of the extruder or nozzle. Manual and automatic controls can be provided for determining the position of the pins and thereby controlling the flow.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a nozzle for an extruder according to an exemplary embodiment of the present invention.
FIG. 2 illustrates a side view of a main body portion of the exemplary nozzle of FIG. 1.
FIG. 3 illustrates a bottom view of the main body portion of FIG. 2. In FIGS. 2 and 3 an exemplary die has been removed from the main body for purposes of additional clarity in describing the invention.
FIG. 4 provides a cross-sectional view along line 4-4 of FIG. 2.
FIG. 5 provides another cross-sectional view along line 5-5 of FIG. 2.
FIG. 6 is a partial cross-sectional view of the exemplary main body of FIG. 2 taken along line 6-6.
FIG. 7 is a perspective view of an exemplary die as can be used with an exemplary nozzle of the present invention.
FIG. 8 is an exemplary pin as can be used with an exemplary nozzle of the present invention.

### DETAILED DESCRIPTION

For purposes of describing the invention, reference now will be made in detail to embodiments of the invention, one or more examples of which are illustrated in the drawings.

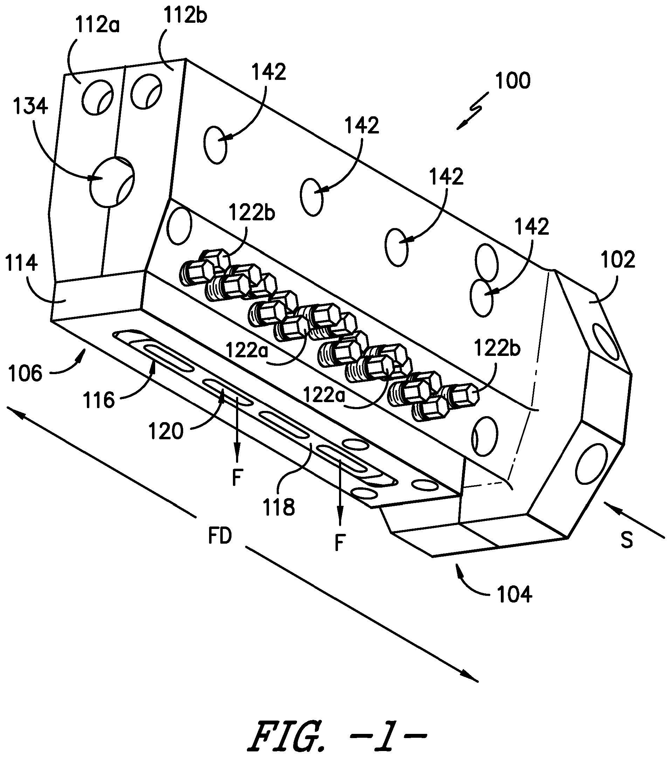

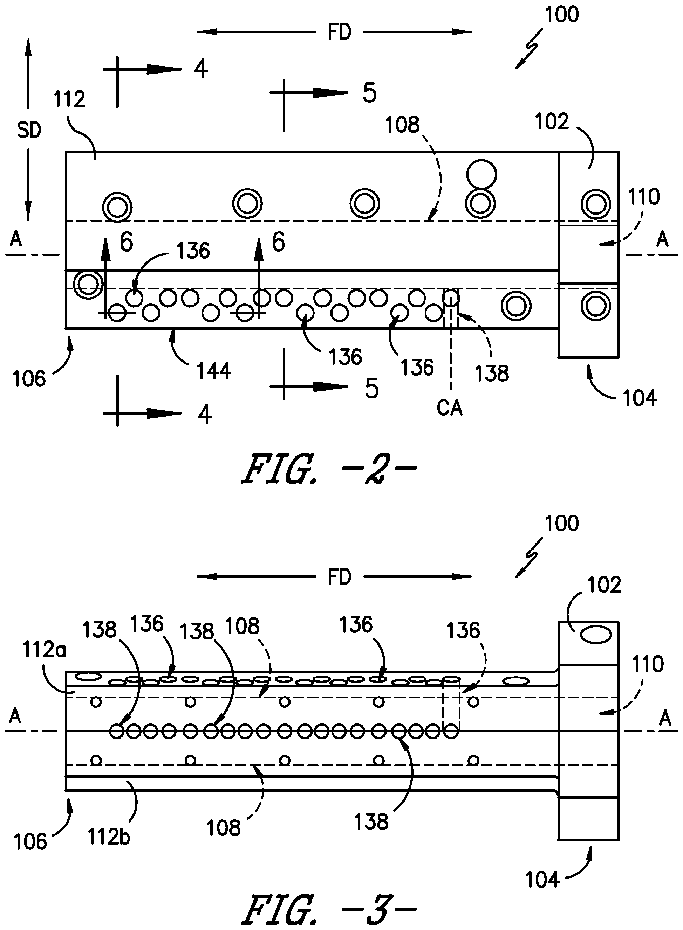

FIG. 1 is a perspective view of an exemplary embodiment of a nozzle 100 of the present invention. A side view of nozzle 100 (with a die holder 114 removed) is provided in FIG. 2 and a bottom view is provided in FIG. 3. For the exemplary embodiment shown in the figures, nozzle 100 includes a main body 112 constructed by joining two portions 112a and 112b. Fastening devices such as e.g., threaded bolts (not shown) can be extended through apertures 142 to hold portions 112a and 112b together securely. Main body portions 112a and 112b may be fabricated from carbon steel that has been machined to create the features described herein. Other constructions and materials may be used for main body 112 as well.

On first end 104, nozzle 100 includes a mounting head 102 that may be used for connecting to an extrusion machine downstream of its screw (not shown), which is used to push material such as a rubber formulation through nozzle 100. An inlet 110 (FIGS. 2 and 3) is defined by nozzle 100 at first end 104 and allows for the flow of material into an internal cavity 108 defined within main body 112 of nozzle 100. For this exemplary embodiment, cavity 108 extends longitudinally along a first direction FD of main body 112 between first end 104 and second end 106. Second end 106 includes an opening or port 134 that can be used e.g., to clean out or flush material through nozzle 100. Port 134 can be plugged or otherwise closed during extrusion operations.

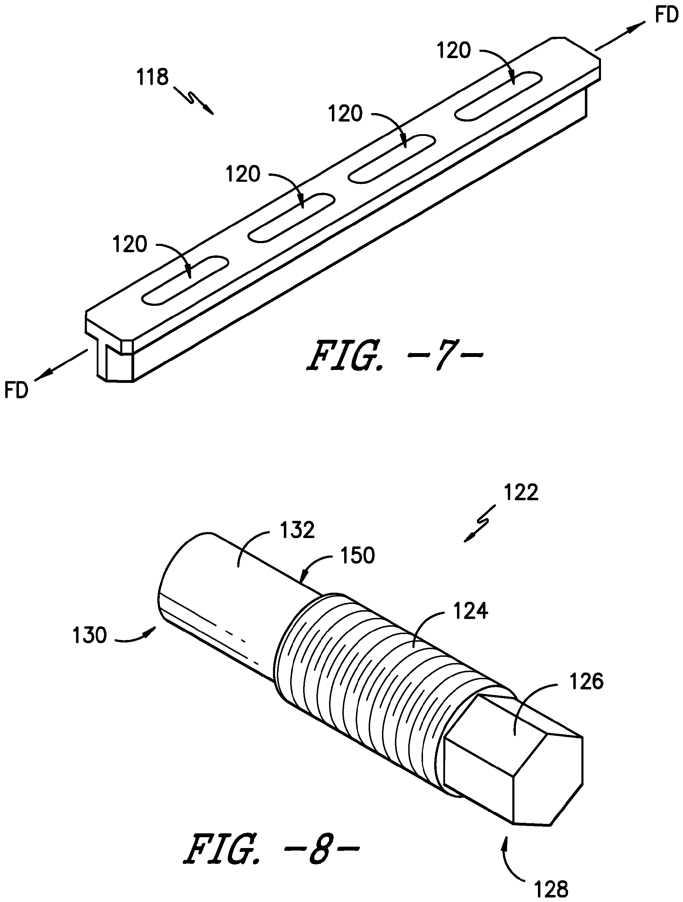

A die holder 114 is attached to a bottom face 144 (FIG. 2) of main body 112. Die holder 114 includes a slot 116 (FIG. 1) into which a die or die plate 118 is received. As shown in FIGS. 1 and 7, die 118 extends along first direction FD. For this embodiment, exemplary die 118 includes a plurality of die apertures 120 spaced apart along first direction FD and positioned adjacent to each other. The flow of material (arrow S) into nozzle 100 is extruded through apertures 120 (arrows F) under the pressure provided by the extrusion machine. The shape of the die apertures 120 is used to control the shape or profile of the extruded material. The shape and number of die apertures 120 depicted in the figures are provided by way of example only and other embodiments may be used. For example, die 118 may be equipped with a single aperture configured to extrude rubber material in the shape of a tread profile. As previously mentioned, one problem with conventional extruders is that the flow of material along the die and through the aperture(s) may not be uniformly distributed across the width of the flow path (i.e. along first direction FD), leading to unacceptable profiles for the extruded material. The present invention provides adjustability in the flow across the width of the flow path (i.e. along first direction FD) in order to more accurately control the flow and obtain the desired profile of extruded material.

More particularly, as shown in FIG. 1, nozzle 100 also includes a plurality of pins 122 positioned adjacent to each other along first direction FD. For this exemplary embodiment, pins 122 are staggered along first direction FD. However, in other exemplary embodiments, pins 122 may be arranged e.g., in a linear manner along first direction FD. As will be further described, the positioned of pins 122 can be used to selectively control the flow of material through cavity 108 to die 118.

Referring to FIGS. 2 and 3, main body 112 defines a plurality of channels 138 that are each connected with (i.e. in fluid communication with) cavity 108. Each channel 138 is shown in the bottom view of FIG. 3 while dashed lines are used to represent only one such channel 138 by way of example in FIG. 2. Each channel has a channel axis CA that is oriented along a second direction, which is orthogonal to first direction FD and is parallel to the overall direction of material flow through each channel 138. The flow of material (arrow S) into cavity 108 passes into channels 138, which are positioned upstream of die apertures 120 in die 118. For this exemplary embodiment, channels 138 are arranged adjacent to each other along first direction FD, are uniformly spaced along first direction FD, and are aligned in a linear manner along a central axis A-A of main body 112. If a sufficient volumetric flow of material is provided, the material will spread throughout cavity 108 to pass into all channels 138.

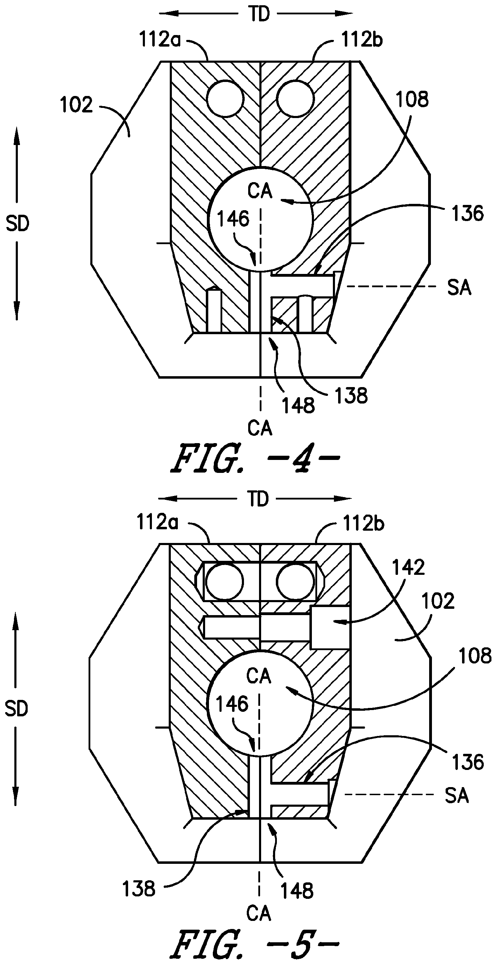

Each pin 122 is associated with at least one channel 138 and is movable in and out of a respective channel 138 so as to selectively control the flow of material through the channel 138 based on the amount of channel obstruction. Referring now to FIGS. 4 and 5, each channel 138 includes a channel inlet 146 and a channel outlet 148 that are upstream of die 118. A plurality of apertures 136 are defined along main body 112, with each aperture intersecting and connected with at least one channel 138. As best seen in FIG. 2, a uniform spacing is used between adjacent apertures 136 for this exemplary embodiment. Each aperture 136 is shown in FIG. 2 while only one such aperture 136 is shown with dashed lines by way of example in FIG. 3. For this exemplary embodiment, pins 122 and apertures 136 are staggered with respect to each other along first direction FD. In other embodiments, pins 122 and apertures 136 may be arranged e.g., linearly or aligned along first direction FD. Apertures 136 have an aperture axis SA oriented along a third direction TD, which is orthogonal to both first direction FD and second direction SD. Each aperture axis SA is also orthogonal to the overall direction of flow through a respective channel 138.

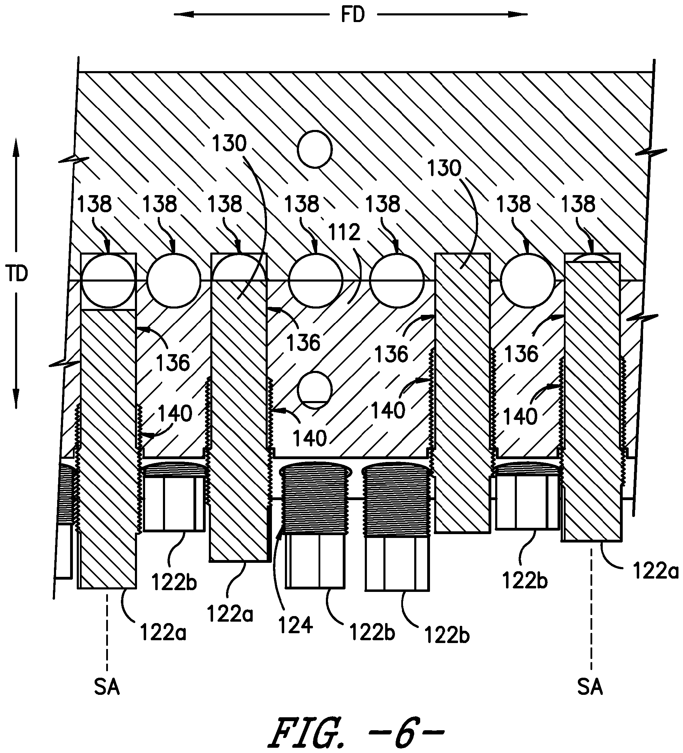

As best seen in FIG. 6, each pin 122 is movable along the aperture axis SA in and out of aperture 136. Such movement controls the amount by which an interior end 130 of each pin 122 protrudes into each channel 138 to obstruct the flow of material there-through from cavity 108 under pressure from the extrusion machine. The amount of obstruction determines the volumetric flow rate of material through channel 138. Because pins 122 intersect each channel 138 along first direction FD, the entire width of flow from cavity 108 to die 118 can be controlled.

Furthermore, as shown in FIG. 6, the position (and, therefore, amount of obstruction) of each pin 122 can be independently controlled. More particularly, pins 122a and 122b are shown in different positions within their respective apertures 136 - resulting in different amount of material flowing through each respective channel 138. Nozzle 100 can thereby be used to more accurately control the full width (along first direction FD) of material flow to die 118 at multiple locations along the width of flow (i.e. along first direction FD) so as to ensure e.g., the desired profile of material is extruded through each die aperture 120 regardless of its position along first direction FD.

Additionally, such adjustments to flow can be made without disassembly of nozzle 100. As shown in FIGS. 6 and 8, each pin 122 includes a plurality of threads along its exterior surface that mate, in complementary fashion, with internal threads 140 positioned within each aperture 136. By rotation of pin 138 either clockwise or counter-clockwise, the movement of pin 138 along aperture axis SA in and out of channel 138 can be used to adjust and fix the amount of flow of material through a respective channel 138. Pin 138 includes a hexagonally-shaped head 126 at exterior end 128 that allows for connection or attachment with a tool to rotate pin 138 as described.

Pin 138 is provided by way of example only. Other mechanisms may be used for manually or automatically adjusting the position of each pin 138 within aperture 136. For example, each pin could be configured with a solenoid or other actuator for automatic adjustment. Other mechanisms may be used as well.

Also, for the exemplary embodiment described herein, each channel 138 is shown with a channel axis CA oriented along a second direction orthogonal to a first direction. Flow through channels 138 is therefore perpendicular to the overall direction of flow S into nozzle 100. In an illustrative example not falling under the scope of the claims, the nozzle may also be constructed so that the overall flow direction through the channels is parallel with the overall direction of flow S into the nozzle, the overall direction of flow through the nozzle cavity, or both.

## Claims

1. A nozzle (100) for controlling extruded material flowing from an extrusion machine, comprising:
a main body (112) defining a cavity (108) for the receipt of material flowing into the nozzle (100) along a first direction (FD);
an inlet (110) connected with the cavity (108) so as to allow extruded material to flow into the cavity (108);
a plurality of channels (138) connected with the cavity (108) to allow for the flow of extruded material out of the cavity (108) and through each of the channels (138), the plurality of channels (138) arranged adjacent to each other along said first direction (FD) of the nozzle (100), wherein each channel (138) has a channel axis (CA) and defines a channel outlet (148) and a direction of material flow through each channel (138) along a second direction (SD) that is orthogonal to the first direction (FD); and
a plurality of pins (122), each pin (122) associated with at least one channel (138) and movable in and out of the channel (138) along a third direction (TD) such that the flow of material through each channel (138) can be selectively adjusted by controlling the amount of obstruction of the channel (138) with the pin (122), wherein the third direction (TD) is orthogonal to both the first and the second direction (FD, SD);
**characterized in that**
the nozzle (100) further comprises a die (118) and a die holder (114), and the die holder (114) is attached to the main body (112) and positioned downstream of the plurality of channels (138), wherein said die holder (114) is configured to receive the flow of extruded material from the plurality of channels (138) and the die holder (114) defines a slot (116) into which the die (118) is received.

2. The nozzle (100) of claim 1, wherein the plurality of channels (138) are arranged linearly along the first direction (FD).

3. The nozzle (100) of claim 1, further comprising a plurality of apertures (136) positioned along the main body (112) with each aperture (136) in receipt of one of the pins (122) with the pins (122) movable within the apertures (136), wherein the apertures (136) are connected with the channels (138).

4. The nozzle (100) of claim 1, further comprising a plurality of threaded apertures (136) defined by the main body (112) and positioned adjacent to each other along the first direction (FD), wherein the plurality of pins (122) are configured with threads (140) for complementary receipt into the plurality of threaded apertures (136) such that rotation of the pins (122) can be used to control the movement of the pins (122) in and out of the channels (138) and along the apertures (136).

5. The nozzle (100) of claim 1, further comprising a plurality of apertures (136) along the main body (112) with each aperture (136) in receipt of one of the pins (122), wherein each pin (122) is movable in and out of at least one of the apertures (136) along an aperture axis (SA) that is orthogonal to a direction of flow of material through the channels (138).

6. The nozzle (100) of claim 1, further comprising a plurality of apertures (136) positioned along the main body (112) with each aperture (136) in receipt of one of the pins (122), wherein the apertures (136) are connected with the channels (138) and are staggered with respect to each other along the first direction (FD).

7. The nozzle (100) of claim 1, further comprising a plurality of apertures (136) positioned along the main body (112) with each aperture (136) in receipt of one of the pins (122), wherein the apertures (136) are connected with the channels (138) and are arranged linearly along the first direction (FD).

8. The nozzle (100) of claim 1, wherein the plurality of channels (138) are uniformly spaced along the first direction (FD).

9. The nozzle (100) of claim 1, further comprising a mounting head (102) attached to the main body (112).

10. The nozzle (100) of claim 1, further comprising
the die (118) attached to the die holder (114) and defining a die aperture (120) for the flow of material out of the nozzle (100).

## Patentansprüche

1. Düse (100) zum Steuern von extrudiertem Material, das aus einer Extrusionsmaschine fließt, umfassend:
einen Hauptkörper (112), der einen Hohlraum (108) zur Aufnahme von Material definiert, das entlang einer ersten Richtung (FD) in die Düse (100) fließt;
einen Einlass (110), der mit dem Hohlraum (108) verbunden ist, sodass extrudiertes Material in den Hohlraum (108) fließen kann;
eine Vielzahl von Kanälen (138), die mit dem Hohlraum (108) verbunden sind, um den Fluss von extrudiertem Material aus dem Hohlraum (108) und durch jeden der Kanäle (138) zu ermöglichen, wobei die Vielzahl von Kanälen (138) entlang der ersten Richtung (FD) der Düse (100) nebeneinander angeordnet ist,
wobei jeder Kanal (138) eine Kanalachse (CA)hat, und einen Kanalauslass (148) und eine Richtung des Materialflusses furch jeden Kanal entlang einer zweiten Richtung (SD) definiert, die orthogonal zu der ersten Richtung (FD) ist; und
eine Vielzahl von Stiften (122), wobei jeder Stift (122) mindestens einem Kanal (138) zugeordnet ist und entlang einer dritten Richtung (TD) in den Kanal hinein und aus dem Kanal (138) heraus bewegbar ist, sodass der Materialfluss durch jeden Kanal (138) selektiv eingestellt werden kann, indem der Grad des Verschlusses des Kanals (138) mit dem Stift (122) gesteuert wird, wobei die dritte Richtung (TD) sowohl zur ersten als auch zur zweiten Richtung (FD, SD) orthogonal ist;
**dadurch gekennzeichnet, dass**
die Düse (100) ferner eine Matrize (118) und einen Matrizenhalter (114) umfasst, und der Matrizenhalter (114) am Hauptkörper (112) angebracht und stromabwärts von der Vielzahl von Kanälen (138) positioniert ist, wobei der Matrizenhalter (114) so ausgelegt ist, dass er den Strom von extrudiertem Material aus der Vielzahl von Kanälen (138) aufnimmt, und der Matrizenhalter (114) einen Schlitz (116) definiert, in dem die Matrize (118) aufgenommen wird.

2. Düse (100) nach Anspruch 1, wobei die mehreren Kanäle (138) linear entlang der ersten Richtung (FD) angeordnet sind.

3. Düse (100) nach Anspruch 1, ferner mit einer Vielzahl von Öffnungen (136), die entlang des Hauptkörpers (112) angeordnet sind, wobei jede Öffnung (136) einen der Stifte (122) aufnimmt und die Stifte (122) innerhalb der Öffnungen (136) beweglich sind, wobei die Öffnungen (136) mit den Kanälen (138) verbunden sind.

4. Düse (100) nach Anspruch 1, ferner mit einer Vielzahl von Gewindeöffnungen (136), die durch den Hauptkörper (112) definiert und entlang der ersten Richtung (FD) nebeneinander angeordnet sind, wobei die Vielzahl von Stiften (122) mit Gewinden (140) zur komplementären Aufnahme in die Vielzahl von Gewindeöffnungen (136) ausgelegt ist, sodass die Drehung der Stifte (122) verwendet werden kann, um die Bewegung der Stifte (122) in die Kanäle (138) hinein und aus diesen heraus sowie entlang der Öffnungen (136) zu steuern.

5. Düse (100) nach Anspruch 1, die ferner eine Vielzahl von Öffnungen (136) entlang des Hauptkörpers (112) aufweist, wobei jede Öffnung (136) einen der Stifte (122) aufnimmt, wobei jeder Stift (122) in mindestens eine der Öffnungen (136) entlang einer Öffnungsachse (SA), die orthogonal zu einer Richtung des Materialflusses durch die Kanäle (138) ist, hinein und aus dieser heraus bewegt werden kann.

6. Düse (100) nach Anspruch 1, die ferner eine Vielzahl von Öffnungen (136) aufweist, die entlang des Hauptkörpers (112) angeordnet sind, wobei jede Öffnung (136) einen der Stifte (122) aufnimmt, wobei die Öffnungen (136) mit den Kanälen (138) verbunden sind und in der ersten Richtung (FD) gegeneinander versetzt sind.

7. Düse (100) nach Anspruch 1, ferner mit einer Vielzahl von Öffnungen (136), die entlang des Hauptkörpers (112) angeordnet sind, wobei jede Öffnung (136) einen der Stifte (122) aufnimmt, wobei die Öffnungen (136) mit den Kanälen (138) verbunden und linear entlang der ersten Richtung (FD) angeordnet sind.

8. Düse (100) nach Anspruch 1, wobei die mehreren Kanäle (138) entlang der ersten Richtung (FD) gleichmäßig im Abstand voneinander angeordnet sind.

9. Düse (100) nach Anspruch 1, die ferner mit einem am Hauptkörper (112) befestigten Montagekopf (102) versehen ist.

10. Düse (100) nach Anspruch 1, die ferner die Matrize (118), die an dem Matrizenhalter (114) befestigt ist, umfasst und eine Matrizenöffnung (120) für den Materialfluss aus der Düse (100) definiert.

## Revendications

1. Buse (100) de régulation de matière extrudée s'écoulant depuis une extrudeuse, comprenant :
un corps principal (112) définissant une cavité (108) pour la réception de matière s'écoulant dans la buse (100) dans un premier sens (FD) ;
une entrée (110) reliée à la cavité (108) de manière à permettre l'écoulement de matière extrudée dans la cavité (108) ;
une pluralité de canaux (138) reliés à la cavité (108) pour permettre l'écoulement de matière extrudée hors de la cavité (108) et à travers chacun des canaux (138), la pluralité de canaux (138) étant agencés adjacents l'un à l'autre dans ledit premier sens (FD) de la buse (100), dans laquelle chaque canal (138) a un axe de canal (CA), et définit une sortie de canal (148) et un sens d'écoulement de matière à travers chaque canal (138) dans un deuxième sens (SD) qui est orthogonal au premier sens (FD) ; et
une pluralité de tiges (122), chaque tige (122) étant associée à au moins un canal (138) et mobile vers l'intérieur et vers l'extérieur du canal (138) dans un troisième sens (TD) de sorte que l'écoulement de matière à travers chaque canal (138) puisse être ajusté sélectivement par la régulation de la quantité d'obstruction du canal (138) avec la tige (122), dans laquelle le troisième sens (TD) est orthogonal à la fois aux premier et deuxième sens (FD, SD) ;
**caractérisée en ce que**
la buse (100) comprend en outre une filière (118), et un porte-filière (114) et le porte-filière (114) est fixé au corps principal (112) et positionné en aval de la pluralité de canaux (138), dans laquelle ledit porte-filière (114) est configuré pour recevoir l'écoulement de matière extrudée depuis la pluralité de canaux (138) et le porte-filière (114) définit une fente (116) dans laquelle la filière (118) est reçue.

2. Buse (100) selon la revendication 1, dans laquelle la pluralité de canaux (138) sont agencés linéairement dans le premier sens (FD) .

3. Buse (100) selon la revendication 1, comprenant en outre une pluralité d'ouvertures (136) positionnées le long du corps principal (112), chaque ouverture (136) recevant l'une des tiges (122), les tiges (122) étant mobiles à l'intérieur des ouvertures (136), dans laquelle les ouvertures (136) sont reliées aux canaux (138).

4. Buse (100) selon la revendication 1, comprenant en outre une pluralité d'ouvertures filetées (136) définies par le corps principal (112) et positionnées adjacentes l'une à l'autre dans le premier sens (FD), dans laquelle la pluralité de tiges (122) sont configurées avec des filetages (140) pour une réception complémentaire dans la pluralité d'ouvertures filetées (136) de sorte qu'une rotation des tiges (122) puisse être utilisée pour réguler le déplacement des tiges (122) vers l'intérieur et vers l'extérieur des canaux (138) et le long des ouvertures (136) .

5. Buse (100) selon la revendication 1, comprenant en outre une pluralité d'ouvertures (136) le long du corps principal (112), chaque ouverture (136) recevant l'une des tiges (122), dans laquelle chaque tige (122) est mobile vers l'intérieur et vers l'extérieur d'au moins l'une des ouvertures (136) le long d'un axe d'ouverture (SA) qui est orthogonal à un sens d'écoulement de matière à travers les canaux (138).

6. Buse (100) selon la revendication 1, comprenant en outre une pluralité d'ouvertures (136) positionnées le long du corps principal (112), chaque ouverture (136) recevant l'une des tiges (122), dans laquelle les ouvertures (136) sont reliées aux canaux (138) et sont décalées l'une par rapport à l'autre dans le premier sens (FD).

7. Buse (100) selon la revendication 1, comprenant en outre une pluralité d'ouvertures (136) positionnées le long du corps principal (112), chaque ouverture (136) recevant l'une des tiges (122), dans laquelle les ouvertures (136) sont reliées aux canaux (138) et sont agencées linéairement dans le premier sens (FD).

8. Buse (100) selon la revendication 1, dans laquelle la pluralité de canaux (138) sont espacés uniformément dans le premier sens (FD).

9. Buse (100) selon la revendication 1, comprenant en outre une tête de montage (102) fixée au corps principal (112).

10. Buse (100) selon la revendication 1, comprenant en outre la filière (118) fixée au porte-filière (114) et définissant une ouverture de filière (120) pour l'écoulement de matière hors de la buse (100).
